# DEMANDE DE BREVET EUROPEEN

(11) **EP 1 844 650 A1**
(43) Date de publication de la demande: **17.10.2007**
(21) Numéro de dépôt: 06290606.0
(22) Date de dépôt: 10.04.2006
(51) Int. Cl.: A01K 39/06

(54) **Machine et procédé de gavage de volatiles**

(71) Demandeur: Arguindeguy, Jean-Jacques, 64240 Hasparren (FR); Caillaud, Robert, 64640 Saint Martin D'Arberque (FR)
(72) Inventeur: Arguindeguy, Jean-Jacques, 64240 Hasparren (FR); Caillaud, Robert, 64640 Saint Martin D'Arberque (FR)
(74) Mandataire: Schmit, Christian Norbert Marie

(57) **Abrégé**

- L'objet de l'invention est une machine (1) de gavage de volatiles tels que les palmipèdes, comportant un châssis (2) pourvu d'un dispositif de distribution de nourriture (4, 5) et d'une ou plusieurs canules (6) de gavage, pour laquelle le châssis (2) est un châssis autoporteur porteur d'un réservoir (3) de nourriture relié au dispositif de distribution (4, 5), le dispositif de distribution comportant une partie (4) d'admission de nourriture en partie inférieure du réservoir (3) et une partie (5) d'amenée de nourriture dans la canule (6) et pour laquelle la partie (4) d'admission de nourriture comporte un premier distributeur à vis, en fond de réservoir (3), distribuant la nourriture à la partie (5) d'amenée de nourriture qui comprend un second distributeur à vis débouchant dans la canule de gavage, le premier distributeur étant calibré pour avoir un débit compatible avec le débit accepté par la partie (5) d'amenée de nourriture.

## Description

La présente invention concerne une machine et un procédé de gavage de volatiles tels que des palmipèdes.

Les élevages de palmipèdes gras de grande capacité nécessitent des moyens de gavage perfectionnés réduisant le temps dévolu à l'opération de gavage et garantissant une grande précision de la quantité d'aliments fournis par opération de gavage.

Le document FR 2 732 553 A1 décrit une machine doseuse gaveuse pour l'engraissement de palmipèdes comportant une trémie dans laquelle plonge un convoyeur ascendant qui y puise une quantité déterminée de l'aliment qu'elle contient et la distribue à un dispositif de transfert commandé par un moyen de dosage pondéral pour délivrer les aliments aux palmipèdes.

Ce moyen de dosage pondéral est opéré par la mesure de la perte de poids du dispositif de transfert

Selon ce document, le dispositif de transfert est intégralement supporté dans une structure support.

Le document FR 2 833 808 A1 décrit pour sa part une installation de gavage mécanique de volailles comprenant un chariot motorisé de distribution de nourriture partant des canules de gavage, des moyens de dosage automatique de portions de nourriture de gavage reliés à un réservoir de nourriture, des moyens de distribution de nourriture sous pression à chaque canule de gavage et des moyens de pilotage automatiques du chariot sur des rails disposés sur un bâti constituant l'ossature de cages de gavage.

La distribution de nourriture selon ce document se fait en utilisant un vérin dont la course définit le volume de nourriture distribuée dans la canule.

Ces dispositifs ne sont pas optimisés pour le gavage de nombreux volatiles disposés dans des cages collectives de grandes dimensions alignées en rangées et pour l'alimentation des volatiles avec une nourriture telle que le maïs grain pour lequel la régulation de la distribution en poids n'est pas adaptée et ne sont pas parfaitement adaptés à des exploitations comportant des cages de grandes dimensions alignées en rangées.

La présente invention vise à offrir un système de gavage perfectionné utilisable dans des exploitation de grandes dimensions comportant des cages collectives, offrant une surface de mouvement importante aux volatiles, alignées en rangées, fournissant une quantité de nourriture parfaitement calibrée aux palmipèdes et simplifiant l'opération de gavage proprement dite de ces palmipèdes.

Pour ce faire la présente invention concerne une machine de gavage de volatiles tels que les palmipèdes, comportant un châssis pourvu d'un dispositif de distribution de nourriture et d'une ou plusieurs canules de gavage, pour laquelle le châssis est un châssis autoporteur porteur d'un réservoir de nourriture relié au dispositif de distribution, le dispositif de distribution comportant une partie d'admission de nourriture en partie inférieure du réservoir et une partie d'amenée de nourriture dans la canule et pour laquelle la partie d'admission de nourriture comporte un premier distributeur à vis, en fond de réservoir, distribuant la nourriture à la partie d'amenée de nourriture qui comprend un second distributeur à vis débouchant dans la canule de gavage, le premier distributeur étant calibré pour avoir un débit compatible avec le débit accepté par la partie d'amenée de nourriture.

Plus particulièrement, le premier distributeur est configuré pour fournir un volume de nourriture calibré en fonction d'un temps de marche en sorte de réaliser une machine doseuse volumo-temporelle.

La machine selon l'invention est ainsi parfaitement adaptée à la distribution d'une nourriture solide de qualité telle que du maïs grain parfaitement dosée en volume.

L'invention concerne en outre un procédé de gavage de volatiles tels que les palmipèdes au moyen d'une machine selon l'invention qui comporte:
une étape de positionnement de la machine au dessus d'un ou plusieurs volatiles,
une étape de transport d'une ration calibrée de nourriture par le dispositif distributeur dans la partie d'amenée de nourriture,
une étape d'immobilisation du volatile, canule enfoncée dans le bec du volatile,
une étape d'introduction d'eau foisonnée dans le jabot du volatile pour dilater son oesophage, et,
une étape de gavage par descente de la ration calibrée de la partie d'amenée dans l'oesophage du volatile.

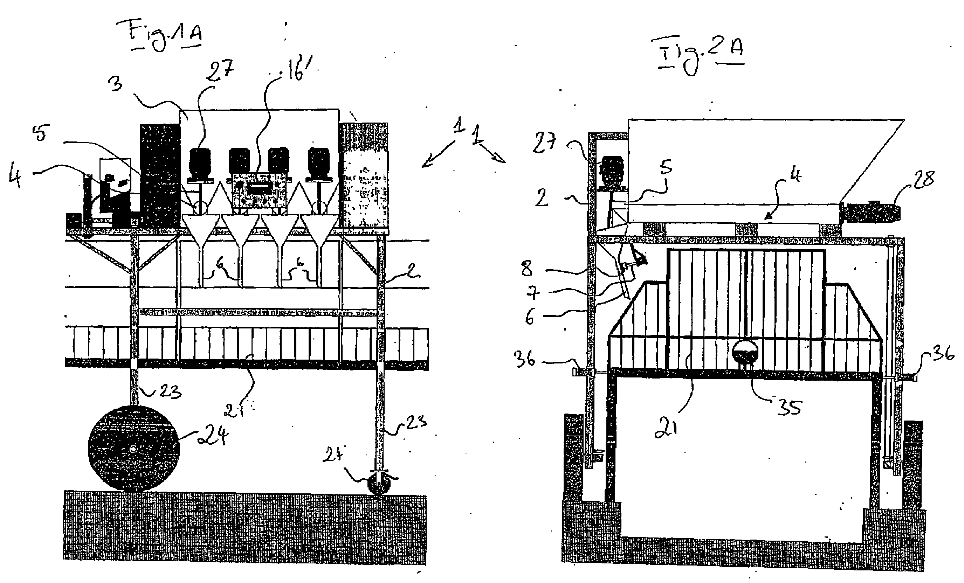

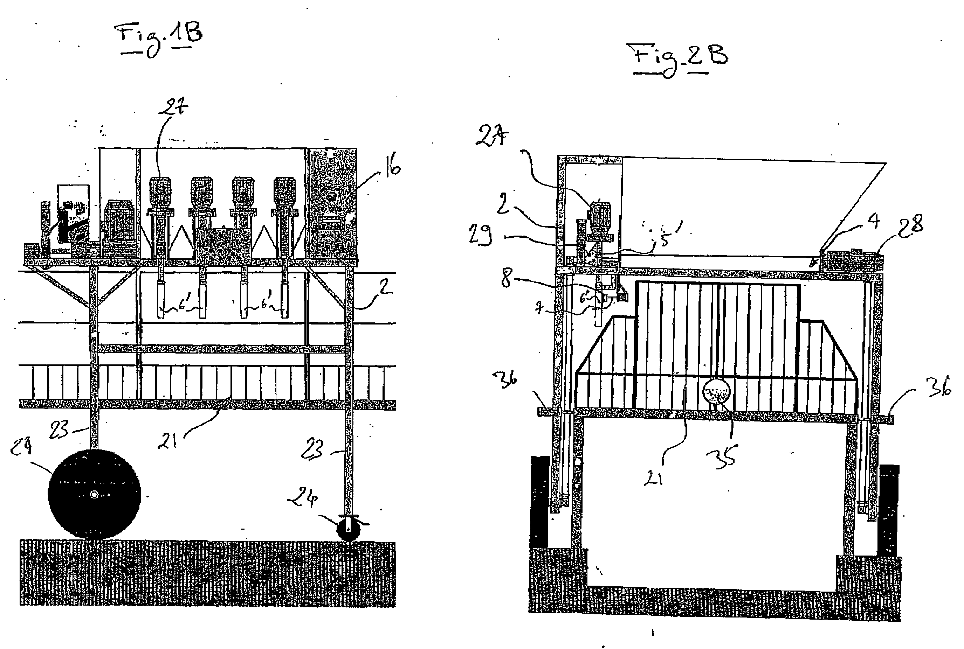

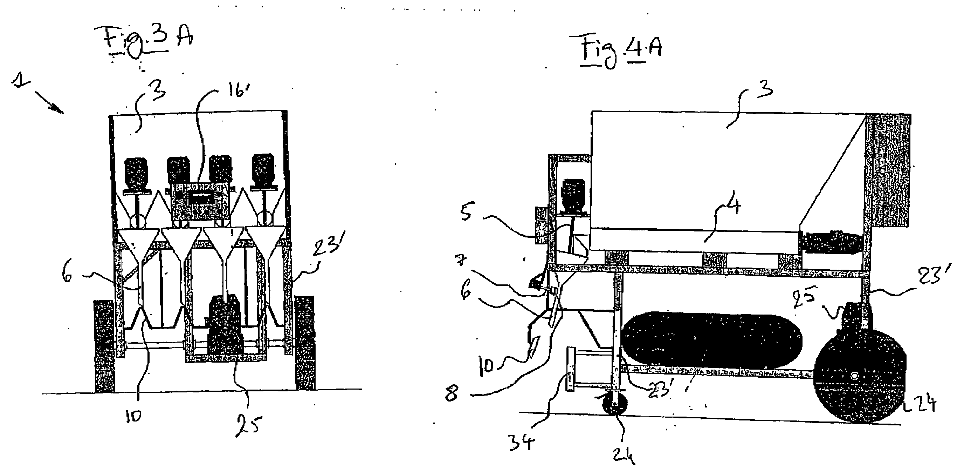

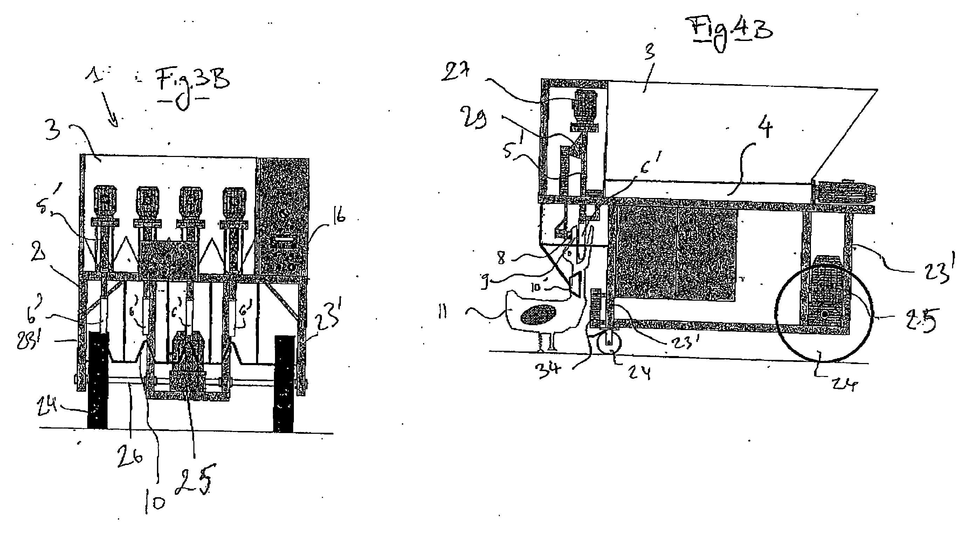

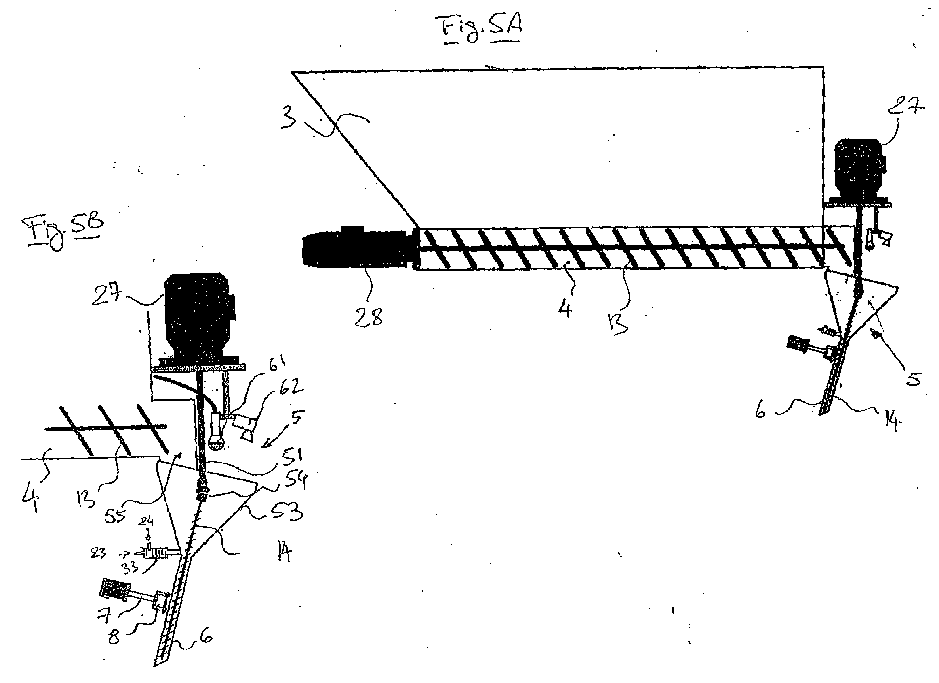

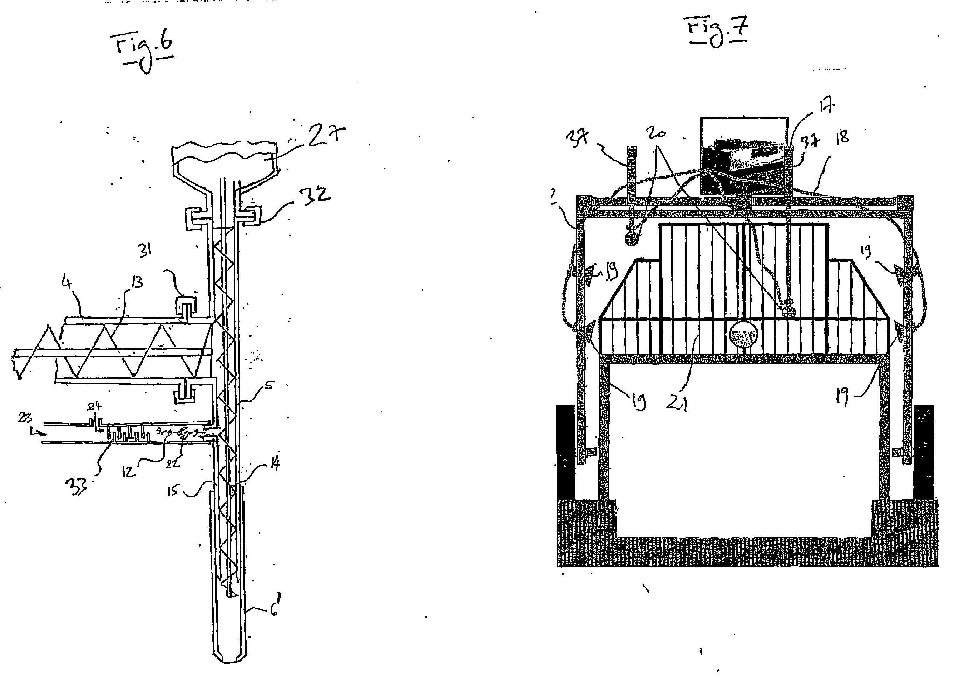

D'autres caractéristiques et avantages de l'invention seront mieux compris à la lecture de la description qui suit accompagnée des dessins qui représentent:
en figures 1A et 1B:des vues de côté d'un premier et d'un second modes de réalisation d'un premier exemple de machine selon l'invention;
en figures 2A et 2B:les machines des figures 1A et 1B en vue de face;
en figures 3A et 3B:une vue de face de machines d'un second exemple de réalisation de l'invention reprenant les premier et second modes;
en figures 4A et 4B:les machines des figures 3A et 3B en vue de côté;
en figure 5A et 5B: des vues schématiques en coupe d'un dispositif de distribution d'une machine et d'un détail dudit dispositif selon le premier mode de réalisation de l'invention;
en figure 6: un détail en coupe d'un dispositif de distribution selon le second mode de réalisation de l'invention;
en figure 7: une vue de face d'une partie de la machine de la figure 1A sur laquelle est représenté un dispositif de nettoyage conforme à un aspect de l'invention.

Les figures 1A et 1B représentent des vues de côté de deux modes de réalisation d'une machine 1 de gavage de volatiles tels que les palmipèdes selon l'invention.

Selon l'exemple des figures 1A et 1B, la machine comporte un châssis 2 qui est monté sur des disposé sur un bâti de surélévation comportant des montants 23 de surélévation du châssis 2 au dessus de cages 21.

Les montants comportent à leur extrémité inférieure des axes pour des roues 24 permettant de déplacer la machine au dessus d'une rangée de cages 21.

Selon cet exemple, le châssis 2 est un châssis autoporteur enjambeur, la machine ou unité d'engraissement selon l'invention étant automotrice par l'intermédiaire d'un moto-réducteur électrique ou moteur 25 représenté en particulier en figures 3A, 3B et est pilotée à l'aide d'un automate 16 comportant un boîtier de commande.

La mobilité de la machine lui permet de se déplacer de la zone de remplissage de nourriture à la zone de distribution de nourriture.

En référence à la figure 2A vue de face de la machine de la figure 1A, le châssis est pourvu d'un dispositif de distribution de nourriture 4, 5, 5', d'une ou plusieurs canules 6 de gavage inclinées et est porteur d'un réservoir 3 de nourriture relié au dispositif de distribution 4, 5, 5'.

Le dispositif de distribution schématisé aux figures 5A et 5B comporte une partie 4 d'admission de nourriture en partie inférieure du réservoir 3 et une partie 5, 5' d'amenée de nourriture dans la ou les canules 6.

Comme représenté sur la figure 5A pour le premier mode de réalisation de la machine selon l'invention, la partie 4 d'admission de nourriture comporte un premier distributeur à vis 13, en fond de réservoir 3, commandé par un moteur 28 et distribuant la nourriture à la partie 5 d'amenée de nourriture.

Selon ce premier mode de réalisation, le second distributeur 14 comporte une vrille de gavage, au moins une partie du second distributeur étant inclinée pour permettre d'incliner les canules 6, l'entonnoir 53 constituant une zone tampon entre le premier et le second distributeurs.

Le second distributeur comprend, comme représenté en figure 5B agrandie de la figure 5A, un entonnoir 53, un second distributeur à vis 14, entraîné par un moteur 27 au travers d'une tige de commande 51 et d'un cardan 54 permettant d'incliner le second distributeur de sorte que la canule 6 soit elle même inclinée pour permettre un positionnement plus aisé de la canule dans le bec du volatile.

Le second distributeur à vis s'étend depuis environ le milieu de l'entonnoir jusqu'à pratiquement le bout de la canule 6 prolongeant l'entonnoir 53.

Pour transférer la nourriture du premier distributeur 13 à la partie d'amenée de nourriture, une ouverture 55 d'admission de la partie d'amenée de nourriture est positionnée en regard de la sortie du premier distributeur pour permettre le passage de la nourriture dans l'entonnoir 53 et le second distributeur à vis 14 et permettre le gavage du volatile.

Pour obtenir un fonctionnement optimal de la distribution de nourriture adapté à la fourniture d'une alimentation solide à base de maïs grain, le premier distributeur 13 est calibré pour avoir un débit compatible avec le débit accepté par la partie 5 d'amenée de nourriture, de sorte que le maïs transporté par le premier distributeur 13 s'écoule en volume calibré dans l'entonnoir du second distributeur 14 sans être écrasé ou détérioré afin, d'une part de permettre un dosage précis des rations données aux volatiles et d'autre part d'éviter la formation d'amas risquant de gêner l'alimentation correcte des volatiles ou d'obstruer le second distributeur.

Avantageusement le dispositif de distribution 4, 5 de la machine de gavage selon l'invention est piloté par un automate 16 régulant la distribution de nourriture en temps de distribution et volume distribué et, selon un procédé de gavage conforme à l'invention, la ration de gavage est dosée au moyen de l'automate 16 pilotant le régime et le temps de fonctionnement du moteur 28 commandant le premier distributeur.

Le premier distributeur est alors configuré pour fournir un volume de nourriture calibré en fonction d'un temps de marche en sorte de réaliser une machine doseuse volumo-temporelle.

L'entonnoir 53 est ouvert dans sa partie supérieure pour permettre de contrôler le dosage de la nourriture distribuée.

En outre, selon un mode de réalisation particulièrement avantageux du premier mode de réalisation, on dispose au dessus de l'entonnoir un dispositif 61 de pulvérisation d'ingrédients supplémentaires permettant d'apporter des compléments nutritifs ou des médicaments qui sont ajoutés à la dose de nourriture contenue dans l'entonnoir.

De plus une caméra ou un capteur visuel 62 sont reliés à l'automate qui comporte un système de commande et de dosage de la ration apportée.

Ce capteur permet d'une part à l'automate de stopper la distribution lorsqu'un niveau de ration est atteint dans l'entonnoir et d'autre part de commander la rotation du second moteur 27 jusqu'au complet vidage de l'entonnoir.

Les figures 1B et 2B correspondent à un second mode de réalisation pour lequel les canules 6' sont mobiles entre une position relevée et une position abaissée.

La partie 4 d'admission de nourriture comporte un premier distributeur à vis 13, en fond de réservoir 3, commandé par un moteur 28 et distribuant la nourriture à la partie 5' d'amenée de nourriture qui comprend un second distributeur à vis 14, entraîné par un moteur 27, débouchant dans la canule de gavage.

Les parties d'amenée de nourriture 5' sont selon ce mode de réalisation montées sur un dispositif vérin 29 adapter pour abaisser et relever ces parties d'amenée de nourriture.

Selon ce mode de réalisation, le second distributeur 14 comporte une vrille de gavage et un tube 15, support de la canule, au moins une partie du second distributeur étant montée coulissante verticalement par rapport au châssis pour amener les canules 6' au niveau des volatiles 11, en position de gavage, et remonter les canules au dessus des volatiles, en position d'attente.

Les figures 3A, 3B et 4A, 4B correspondent à un second exemple de réalisation de la machine selon l'invention adaptée pour un nourrissage des volatiles au niveau du sol, par exemple pour des volatiles hébergés dans des parcs. Selon cet exemple, le châssis est disposé sur un bâti comportant des jambes 23' plus courtes que dans le premier exemple de réalisation, des roues 24 dont au moins une paire est reliée à un moteur d'entraînement 25 au travers d'un arbre 26.

Le châssis selon cet exemple est également un châssis autoporteur sur lequel est disposé un réservoir 3 et des moyens de distribution de nourriture 4, 5, 5'.

Dans l'exemple de la figure 4B correspondant au mode de réalisation de l'invention à canules 6' mobile selon un axe vertical, une partie d'amenée de nourriture 5' avec sa canule 6' est représentée abaissée en position de gavage d'un volatile 11 alors qu'en figure 3B, les parties d'amenée de nourriture 5' sont en position relevée d'attente pour le déplacement de la machine 1 entre des postes de gavages consécutifs.

Comme dans le cas du premier exemple de réalisation, la machine comporte plusieurs postes de gavage, 4 selon l'exemple, chacun muni de sa partie d'amenée de nourriture 5 et de sa canule 6.

Les figures 3A et 3B correspondent au second exemple de réalisation de l'invention selon le premier mode de réalisation du dispositif de distribution à canules fixes inclinées 6.

La figure 6 représente un détail d'un mode de réalisation de l'invention à distributeurs fixes centré sur la partie 5 d'amenée de nourriture solidarisée à la sortie de la partie d'admission 4 par un premier collier 31 et au moteur 27 par un second collier 31. Cet exemple comporte une canule télescopique 6' mais pour réaliser un dispositif selon le second mode de réalisation il est possible de prévoir un distributeur à tiroir au niveau de la jonction entre le premier et le second distributeurs pour permettre au second distributeur de coulisser verticalement sous l'action du vérin 29.

Selon cet exemple, la partie 5 d'amenée de nourriture comprend une dérivation 12 d'amenée d'eau foisonnante 22 vers la canule 6.

Une telle dérivation se retrouve dans le cas du premier mode de réalisation représenté en figure 5B et est dans ce cas disposée en partie basse de l'entonnoir 53 au niveau de la jonction de l'entonnoir avec la canule 6.

L'eau foisonnante est obtenue par un mélange d'eau 23 et d'air 24 sous pression, ce mélange étant réalisé dans une chicane de brassage et détendu pour être injecté dans le jabot du volatile au travers de la canule 6.

La quantité d'eau foisonnée injectée sous une faible pression de l'ordre de 0,02 bar est programmée par l'opérateur au travers d'un boîtier de commande d'un automate 16 pilotant le dispositif de distribution et régulant la distribution de nourriture en temps de distribution et volume distribué.

L'injection d'eau foisonnée permet de dilater l'oesophage du volatile afin de permettre le passage de la ration d'engraissement du volatile jusqu'au jabot du volatile sous l'action du moteur.

Selon un mode de réalisation avantageux, la machine selon l'invention comprend des moyens 7, 8, 10 de maintien des volatiles pendant la distribution de nourriture. Ces moyens sont en particulier visibles sur les figures 2A, 2B et 4A, 4B.

Ils comprennent un bras télescopique ou un vérin à pression contrôlée 7 fixé sur le châssis par l'une de ses extrémités et portant à l'autre de ses extrémités ou extrémité libre un coussinet 8 préférablement réalisé dans un matériau souple tel que le caoutchouc. Le vérin est avantageusement un vérin pneumatique permettant d'appliquer une pression contrôlée sur le bec du volatile.

Sur les figures 2A et 2B, le bras est en extension et le coussinet repose contre la canule 6, 6'.

Sur la figure 4B le volatile est représenté en position de gavage et le coussinet 8 s'applique sur la partie supérieure 9 du bec du volatile 11 qui est tenu vertical par la canule de gavage.

Sur la figure 4A, les moyens de maintien du volatile sont représentés en position de maintien du volatile, celui -ci n'étant ici pas représenté.

Les moyens de maintien des volatiles comprennent en outre, selon l'exemple des figures 4A, 4B, un élément 10 en forme d'appuie tête qui retient le cou du volatile vers l'avant vers un coussin 34 évitant que le volatile vienne se cogner sur le châssis de la machine et ne se blesse.

Les moyens de maintien réalisent des zones d'engraissement embarquées permettant le bon positionnement et le maintien du corps des volatiles pendant la distribution de leur ration de nourriture.

Comme vu plus haut, la machine selon un premier mode de réalisation de l'invention est susceptible d'enjamber des cages 21 alignées.

Ces cages sont des cages collectives permettant selon des normes imposant de laisser la possibilité aux volatiles de se tenir debout en posture normale, de se retourner sans difficultés, de déféquer en effectuant de mouvements normaux, d'effectuer des mouvements de lissage de plumes, d'interagir normalement avec d'autres individus et d'accomplir les mouvements normaux leur permettant de se toiletter et de s'abreuver. Dans ce but les cages sont de dimensions suffisantes pour ces caractéristiques en fonction du nombre d'animaux qu'elles contiennent et comportent un abreuvoir 35 représenté à la figure 2.

Pour le nettoyage des cages, le châssis de la machine selon l'invention porte préférentiellement un dispositif de nettoyage, représenté figure 7, constituant une unité de lavage comportant un nettoyeur haute pression 17, des tubulures d'amenée de liquide de nettoyage 18, des buses 20 ou têtes de lavages mues par des vérins 37 disposés sur le châssis et orientées vers les cages 21 et diverses parties de cages, et des rampes amovibles 19.

Le déplacement transversal et vertical de chaque tête ou buse 20 permet le lavage de la totalité des cages 21 et les rampes amovibles 19 permettent le nettoyage des allées et des côtés extérieurs des cages.

L'invention concerne en outre un procédé de gavage de volatiles tels que les palmipèdes au moyen d'une machine décrite ci-dessus et qui comporte après remplissage de la trémie 3 à son point de chargement et déplacement de la machine vers le lieu de distribution:
une étape de positionnement de la machine 1 au dessus d'un ou plusieurs volatiles 11 disposés éventuellement dans des cages 21,
une étape de transport d'une ration calibrée de nourriture par le dispositif distributeur dans la partie 5 d'amenée de nourriture,
une étape d'immobilisation du volatile, canule enfoncée dans le bec du volatile, éventuellement précédée pour le second mode de réalisation d'une étape de descente de la canule 6',
une étape d'introduction d'eau foisonnée 22 dans le jabot du volatile pour dilater son oesophage , et,
une étape de gavage par descente de la ration calibrée de la partie d'amenée dans l'oesophage du volatile.

Pour réaliser l'engraissement, l'opérateur positionne l'unité d'engraissement en bout de ligne et au dessus des cages collectives, dans le cas de cages alignées, actionne la mise en marche automatique de l'engraissement, l'unité d'engraissement se positionne au premier poste d'engraissement de la ligne de cages grâce à un indexage permis par des capteurs de position 36.

L'opérateur attrape le premier volatile de la cage et le positionne dans la zone d'engraissement. Une fois en position dans la zone d'engraissement, les moyens de maintien sont activés et la position du volatile est maintenue à l'aide du coussinet 8 actionné par le vérin à pression contrôlée.

L'opérateur peut alors démarrer la distribution d'une dose de nourriture calibrée ou qu'il aura définie au préalable.

Le contrôle de la dose et de sa complète ingestion est fait soit visuellement au niveau de l'entonnoir soit piloté par l'automate à partir des données reçues du capteur 62.

Lorsque le premier volatile aura ingéré sa ration de nourriture, l'opérateur pourra se saisir du deuxième volatile pour répéter l'opération, l'immobilisation de premiers volatiles d'une cage étant maintenue pendant le gavage de seconds volatiles par d'autres canules portées par le châssis.

Lors de la fin de l'engraissement du dernier volatile présent dans la cage, les autres volatiles de la cage sont libérés de sorte que l'ensemble des volatiles d'une cage soient libérés simultanément après le gavage du dernier volatile de la cage.

A la fin de la séance de gavage, l'opérateur remet l'unité d'engraissement à son emplacement de remplissage dans l'attente du repas suivant.

## Revendications

1. - Machine (1) de gavage de volatiles (11) tels que les palmipèdes, comportant un châssis (2) pourvu d'un dispositif de distribution de nourriture (4, 5, 5') et d'une ou plusieurs canules (6, 6') de gavage, pour laquelle le châssis (2) est un châssis autoporteur porteur d'un réservoir (3) de nourriture relié au dispositif de distribution (4, 5, 5'), le dispositif de distribution comportant une partie (4) d'admission de nourriture en partie inférieure du réservoir (3) et une partie (5, 5') d'amenée de nourriture dans la canule (6, 6') et pour laquelle la partie (4) d'admission de nourriture comporte un premier distributeur à vis (13), en fond de réservoir (3), distribuant la nourriture à la partie (5, 5') d'amenée de nourriture qui comprend un second distributeur à vis (14) débouchant dans la canule, de gavage, le premier distributeur (13) étant calibré pour avoir un débit compatible avec le débit accepté par la partie (5, 5') d'amenée de nourriture.

2. - machine selon la revendication 1, pour laquelle le premier distributeur est configuré pour fournir un volume de nourriture calibré en fonction d'un temps de marche en sorte de réaliser une machine doseuse volumo-temporelle.

3. - machine selon la revendication 1 ou 2 **caractérisée en ce que** la partie (5) d'amenée de nourriture comporte une zone tampon réalisée par un entonnoir (53) entre le premier et le second distributeurs.

4. - machine selon la revendication 3 pour laquelle un dispositif (61) de pulvérisation d'ingrédients supplémentaires permettant d'apporter des compléments nutritifs ou des médicaments qui sont ajoutés à la dose de nourriture contenue dans l'entonnoir (53) est disposé au dessus de l'entonnoir (53).

5. - machine selon l'une des revendications précédentes pour laquelle le châssis (2) est un châssis enjambeur.

6. - machine de gavage selon l'une des revendications précédentes, **caractérisée en ce qu'**elle comprend des moyens (7, 8, 10) de maintien des volatiles pendant la distribution de nourriture.

7. - machine de gavage selon la revendication 6, pour laquelle les moyens de maintien comprennent un coussinet (8) s'appliquant sur la partie supérieure (9) du bec du volatile (11), tenu vertical par la canule de gavage et un vérin (7) portant le coussinet (8).

8. - machine de gavage selon l'une des revendications précédentes, pour laquelle la partie (5, 5') d'amenée de nourriture comprend une dérivation (12) d'amenée d'eau foisonnante (22) vers la canule (6, 6').

9. - machine de gavage selon l'une quelconque des revendications précédentes, pour laquelle le second distributeur (14) comporte une vrille de gavage et un tube (15) support de la canule, au moins une partie du second distributeur étant montée coulissante verticalement par rapport au châssis pour amener les canules (6) au niveau des volatiles (11), en position de gavage, et remonter les canules au dessus des volatiles, en position d'attente.

10. - machine de gavage selon l'une des revendications précédentes pour laquelle le dispositif de distribution (4, 5) est piloté par un automate (16) régulant la distribution de nourriture en temps de distribution et volume distribué.

11. - machine de gavage selon l'une des revendications précédentes pour laquelle le châssis (2) porte un dispositif de nettoyage (17, 18, 19, 20) pourvu de buses (19) orientées vers des cages (21) disposées sous le châssis.

12. - procédé de gavage de volatiles tels que les palmipèdes au moyen d'une machine selon l'une quelconque des revendications précédentes **caractérisé en ce qu'**il comporte:
une étape de positionnement de la machine (1) au dessus d'un ou plusieurs volatiles (11),
une étape de transport d'une ration calibrée de nourriture par le dispositif distributeur dans la partie (5, 5') d'amenée de nourriture,
une étape d'immobilisation du volatile, canule enfoncée dans le bec du volatile,
une étape d'introduction d'eau foisonnée (22) dans le jabot du volatile pour dilater son oesophage , et,
une étape de gavage par descente de la ration calibrée de la partie d'amenée dans l'oesophage du volatile.

13. - procédé de gavage de volatiles selon la revendication 12 pour lequel l'immobilisation de premiers volatiles d'une cage est maintenue pendant le gavage de seconds volatiles par d'autres canules portées par le châssis.

14. - procédé de gavage selon la revendication 12 ou 13 pour lequel l'ensemble des volatiles d'une cage sont libérés simultanément après le gavage du dernier volatile de la cage.

15. - procédé de gavage selon l'une des revendications 12 à 14 pour lequel l'étape d'immobilisation du volatile est précédée d'une étape de descente de la canule (6).

16. - procédé de gavage selon l'une des revendications 12 à 15 pour lequel la ration est de gavage est dosée au moyen d'un automate pilotant le régime et le temps de fonctionnement d'un moteur commandant le premier distributeur.
